# EUROPEAN PATENT APPLICATION

(11) **EP 4 650 169 A1**
(43) Date of publication of application: **19.11.2025**
(21) Application number: 25177149.9
(22) Date of filing: 17.05.2025
(51) Int. Cl.: B32B 27/12, B32B 1/00, B32B 5/02, B32B 7/12, B32B 27/16, B32B 27/36

(54) **METHOD FOR FORMING A SELF-SUPPORTING STRUCTURAL PANEL**

(30) Priority: 17.05.2024 IT 202400011260
(71) Applicant: Romanò, Francesco, 10090 Castiglione Torinese (TO) (IT)
(72) Inventor: Romanò, Francesco, 10090 Castiglione Torinese (TO) (IT)
(74) Representative: Aprà, Mario

(57) **Abstract**

Method for forming a self-supporting structural panel (10), wherein:
- said panel (10) has an outer surface (11.1) with aesthetic appearance and comprises a multilayer structure (10.1) comprising:
- a first sheet (11) made of polycarbonate (PC) with an external surface scratch-resistant siloxane treatment, which provides said outer surface (11.1) with aesthetic appearance and scratch-resistant properties;
- a second sheet (12) made of a thermoplastic polyurethane (TPU) adhesive medium; and
- a third sheet (13) made of carbon fibre,

wherein said panel is obtained by performing a thermoforming step of said first polycarbonate sheet (11) according to the geometry of the finished panel (10) using a conventional method,
and wherein said method is characterised by comprising the steps of:
- laminating said third carbon fibre sheet (13) according to the geometry of said thermoformed first polycarbonate sheet (11);
- assembling, by means of the vacuum bag method in an autoclave, said first polycarbonate sheet (11) and said third carbon fibre sheet (13) by interposing, between said two sheets, said second thermoplastic polyurethane sheet (12) as adhesive medium, thereby forming said multilayer structure (10.1);
- trimming said multilayer structure (10.1) by milling using a high-speed five-axis CNC machine tool, thereby forming said panel (10) as a self-supporting structural panel.

## Description

The present invention relates to a method for forming a self-supporting structural panel. The present invention further relates to the self-supporting structural panel obtained by the above-mentioned method.

Documents US 2020/130330 A1, US 2018/093452 A1, US 2012/237759 A1, US 2017/203479 A1, US 2019/344642 A1 and US 2020/109248 A1 disclose a panel of the above-specified type.

Known polycarbonate panels, used in particular as bodywork elements of a motor vehicle, have unfavourable weight and strength properties. This fact limits their use and complicates the installation process.

One object of the present invention is to provide a method for forming a self-supporting structural panel which is of low weight and has high structural strength.

Another object of the invention is to provide a self-supporting structural panel which is obtained by said method and has an outer surface with aesthetic appearance, is suitable for forming a complete element applicable in various zones of the bodywork of a motor vehicle, and does not require, for its installation, a framework or other complementary supporting structure.

With a view to these objects, the present invention provides a method for forming a self-supporting structural panel having an outer surface with aesthetic appearance and comprising a multilayer structure comprising:
a first sheet made of polycarbonate with external surface scratch-resistant siloxane treatment, which provides said outer surface with aesthetic appearance and scratch resistance properties;
a second sheet made of a thermoplastic polyurethane adhesive medium; and
a third sheet made of carbon fibre,
wherein said panel is obtained by performing the following steps:
thermoforming the first polycarbonate sheet according to the geometry of the finished panel, by a conventional method;
laminating the third carbon fibre sheet according to the geometry of said thermoformed first polycarbonate sheet;
assembling, by means of the vacuum bag method in an autoclave, said first polycarbonate sheet and said third carbon fibre sheet by interposing, between said two sheets, a second thermoplastic polyurethane sheet as an adhesive medium, forming a multilayer structure;
trimming said multilayer structure by milling carried out with a high-speed five-axis CNC machine tool, thereby forming said panel as a self-supporting structural panel.

The panel obtained by the above-mentioned method has an outer surface with aesthetic appearance and comprises a multilayer structure comprising:
a first sheet made of polycarbonate with external scratch-resistant siloxane treatment, which provides said outer surface with aesthetic appearance;
a second sheet made of a thermoplastic polyurethane adhesive medium, and
a third sheet made of carbon fibre,
wherein said multilayer structure is configured as a self-supporting structural panel.

The above-mentioned three sheets, assembled together, form a panel having self-supporting structural characteristics, wherein said sheets have respective minimum thicknesses and confer high stiffness to the panel.

This allows not only a significant weight reduction with respect to conventional polycarbonate panels, but also, thanks to the substantial increase in structural stiffness, the use of the panel according to the invention as a stand-alone element of the bodywork of a motor vehicle.

It is noted that the above-mentioned weight reduction of the panel according to the invention with respect to known polycarbonate panels results both from the weight reduction of the panel itself, and from the elimination of all supporting and stiffening structures that are necessary for the use of known polycarbonate panels as bodywork elements of a motor vehicle. This fact significantly simplifies the use of the panel according to the invention as a bodywork element of a motor vehicle.

Below are given some examples of application of the panel according to the invention.

The panel made with a transparent polycarbonate sheet approved according to ECE R43 is used as a replacement for mineral glass in motor vehicles and also provides a self-supporting structural element, like glass but with significantly reduced weight.

The panel with a transparent polycarbonate sheet having black screen printing applied on the inner surface of the panel can be used as a replacement for applications with black mineral glass, having comparable aesthetic characteristics, very high-performing structural characteristics, and significantly reduced weight.

The panel with a transparent polycarbonate sheet may have complex shapes for motor vehicle glazing with very high-performing structural characteristics and significantly reduced weight.

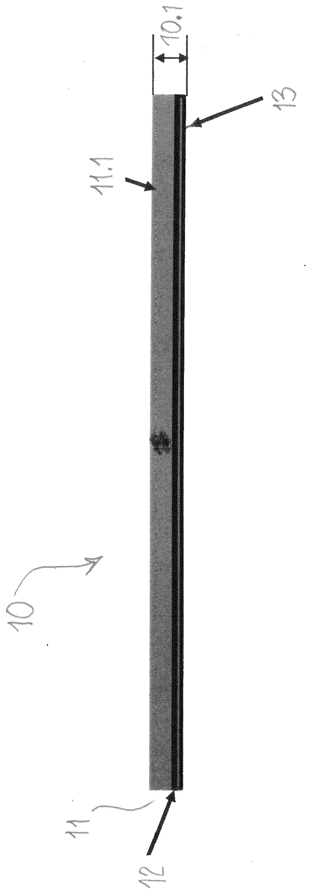

Features and advantages of the invention will become more apparent from the following detailed description of an embodiment, with reference to the drawing, which shows important details for the invention, as well as from the claims.

The features illustrated herein are not necessarily to be understood as to scale and are represented in such a way that the peculiarities according to the invention are clearly highlighted.

The various features may be implemented individually or in any combination thereof, as variants of the invention.

In the drawing, the single figure schematically illustrates a vertical section of the self-supporting structural panel, according to one embodiment of the invention

In said figure, reference numeral 10 indicates said self-supporting structural panel. Said panel 10 has an outer surface 11.1 with aesthetic appearance and comprises a multilayer structure 10.1 comprising:
a first sheet 11 made of polycarbonate (PC) with external surface scratch-resistant siloxane treatment, which provides said outer surface 11.1 with aesthetic appearance and scratch-resistant properties;
a second sheet 12 made of a thermoplastic polyurethane (TPU) adhesive medium; and
a third sheet 13 made of carbon fibre,
wherein said multilayer structure 10.1 is configured as a self-supporting structural panel, and wherein said first sheet 11 and said third sheet 13 are mutually assembled by interposing said second adhesive sheet 12 therebetween.

Said first sheet 11 has, for example, a thickness of 2 mm, on which a siloxane scratch-resistant coating 11.1 is applied. Said first sheet 11, in the transparent version, is approved according to ECE R43.

Said second sheet 12 has, for example, a thickness of 0.6 mm.

Said third sheet 13 has, for example, a thickness of 1.2 mm.

The total thickness of the multilayer structure 10.1 of panel 10 is 3.8 mm.

Technical characteristics of panel 10 manufactured as indicated above:
Specific weight of polycarbonate = 1.2 kg/dm³
Specific weight of carbon fibre = 1.7 g/cm³
Specific weight of thermoplastic polyurethane = 1.07 kg/dm³
Polycarbonate sheet E = 2300 MPa
Carbon fibre E = 231 GPa

It is noted that the forming method of panel 10 comprises the following steps:
thermoforming a first polycarbonate sheet 11 according to the geometry of the finished panel 10, by a conventional method;
laminating a third carbon fibre sheet 13 according to the geometry of the thermoformed first polycarbonate sheet 11;
assembling, by means of the vacuum bag method in an autoclave, the first polycarbonate sheet 11 and the third carbon fibre sheet 13 by interposing, between said two sheets, a second thermoplastic polyurethane sheet 12 as adhesive medium, thereby forming a multilayer structure 10.1;
trimming said multilayer structure 10.1 by milling carried out with a high-speed five-axis CNC machine tool, thereby forming said panel 10 as a self-supporting structural panel.

As appears from the foregoing, the present invention provides a self-supporting structural panel which achieves, in a simple and effective manner, the objects set out in the introductory part of the present description.

## Claims

1. A method for forming a self-supporting structural panel (10), wherein:
- said panel (10) has an outer surface (11.1) with aesthetic appearance and comprises a multilayer structure (10.1) comprising:
- a first sheet (11) made of polycarbonate (PC) with an external surface scratch-resistant siloxane treatment, which provides said outer surface (11.1) with aesthetic appearance and scratch-resistant properties;
- a second sheet (12) made of a thermoplastic polyurethane (TPU) adhesive medium; and
- a third sheet (13) made of carbon fibre,
wherein said panel is obtained by performing a thermoforming step of said first polycarbonate sheet (11) according to the geometry of the finished panel (10), by a conventional method,
and wherein said method is **characterised in that** it comprises the steps of:
- laminating said third carbon fibre sheet (13) according to the geometry of said thermoformed first polycarbonate sheet (11);
- assembling, by means of the vacuum bag method in an autoclave, said first polycarbonate sheet (11) and said third carbon fibre sheet (13) by interposing, between said two sheets, said second thermoplastic polyurethane sheet (12) as adhesive medium, thereby forming said multilayer structure (10.1);
- trimming said multilayer structure (10.1) by milling carried out with a high-speed five-axis CNC machine tool, thereby forming said panel (10) as a self-supporting structural panel.

2. A panel (10) obtained by the method according to claim 1, having an outer surface (11.1) with aesthetic appearance and comprising a multilayer structure (10.1) including:
- a first sheet (11) made of polycarbonate (PC) with an external surface scratch-resistant siloxane treatment, which provides said outer surface (11.1) with aesthetic appearance and scratch-resistant properties;
- a second sheet (12) made of a thermoplastic polyurethane (TPU) adhesive medium; and
- a third sheet (13) made of carbon fibre,
wherein said multilayer structure (10.1) is configured as a self-supporting structural panel (10), and said first sheet (11) and said third sheet (13) are mutually assembled by interposing said second sheet (12)
